# EUROPÄISCHE PATENTSCHRIFT

(11) **EP 2 010 599 B1**
(45) Veröffentlichungstag und Bekanntmachung des Hinweises auf die Patenterteilung: **22.07.2009**
(21) Anmeldenummer: 07726562.7
(22) Anmeldetag: 01.03.2007
(51) Int. Cl.: C08K 5/00

(54) **ELASTOMERPRODUKT MIT RADIKALISCH VERNETZTER KAUTSCHUKMISCHUNG**
ELASTOMERIC PRODUCT WITH RADICALLY VULCANIZED RUBBER MIXTURE
PRODUIT ÉLASTOMÈRE AVEC MÉLANGE DE CAOUTCHOUC A RÉTICULATION RADICALAIRE

(30) Priorität: 20.04.2006 DE 102006018717
(43) Veröffentlichungstag der Anmeldung: 07.01.2009
(73) Patentinhaber: ContiTech Antriebssysteme GmbH, 30165 Hannover (DE)
(72) Erfinder: TEVES, Reinhard, 30926 Seelze (DE); WELL, Michael, 38159 Vechelde (DE); GRÜSSEL, Karl-Friedrich, 29221 Celle (DE)
(74) Vertreter: Finger, Karsten
(86) Internationale Anmeldenummer: PCT/EP2007/051926
(87) Internationale Veröffentlichungsnummer: WO 2007/122031

(56) Entgegenhaltungen:
- DE-A1- 4 309 893
- US-A1- 2005 090 618

## Beschreibung

Die Erfindung betrifft ein Elastomerprodukt, das eine radikalisch vernetzte Kautschukmischung enthält.

An Elastomerprodukte, die hohen dynamische Belastungen standhalten müssen, wie z. B. Antriebsriemen, Transportbänder oder flexible Schläuche, werden hohe Anforderungen hinsichtlich der Eigenschaften, wie Abriebbeständigkeit, Elastizitätsmodul, Zugfestigkeit, Weiterreißfestigkeit, Alterungsbeständigkeit, Kälteflexibilität, Wärmeaufbau, Chemikalien- und Ölbeständigkeit, gestellt. Bei Antriebsriemen kommt hinzu, dass sie beim Lauf in Riementrieben eine geringe Geräuschentwicklung zeigen sollen und die gewünschten mechanischen Eigenschaften auch bei hohen Temperaturen erhalten bleiben. Insgesamt sollen die genannten Eigenschaften dazu beitragen, dass das Elastomerprodukt eine hohe Lebensdauer aufweist.

Um diesen hohen Anforderungen speziell im Hinblick auf die Wärmebeständigkeit gerecht zu werden, werden für viele Elastomerprodukte, insbesondere für Antriebsriemen, radikalisch, d. h. peroxidisch, vernetzte Kautschukmischungen eingesetzt. Diese radikalisch venetzten Kautschukmischungen basieren z. B. auf hydriertem Nitrilkautschuk (HNBR), Ethylen-Propylen-Dien-Kautschuk (EPDM) und/oder Ethylen-Propylen-Kautschuk (EPM). Zur Erhöhung des Vernetzungsgrades und zur Verbesserung der Vulkanisateigenschaften radikalisch vernetzter Kautschukmischungen ist es außerdem bekannt, der Mischung Coagenzien/Coaktivatoren, wie z. B. Triallylverbindungen oder reaktive Acrylatderivate, zuzusetzen. Als Coagenzien werden u. a. Metallsalze von α,β-ungesättigten Carbonsäuren, z. B. Zinksalze der Acryl- oder Methacrylsäure, vorgeschlagen.

In der EP 0 866 834 B1 werden beispielsweise Antriebsriemen mit hoher Lebensdauer beschrieben, die auf EPDM und/oder EPM basieren und 32 bis 100 phr zumindest eines Metallsalzes einer α,β-ungesättigten Carbonsäure, bevorzugt Zinkdiacrylat, aufweisen.

Die EP 1 205 515 A1 offenbart die Verwendung von 1 bis 30 phr zumindest eines Metallsalzes einer α,β-ungesättigten Carbonsäure, insbesondere Zinkdimethacrylat, in Mischungen von Ethylen-alpha-Olefin-Kautschuk, wie EPDM und EPM, bei Antriebsriemen.

In der JP 2981575 B2 werden Antriebsriemen beschrieben, die eine peroxidisch vernetzte Kautschukmischung enthalten, wobei die Kautschukmischung auf einem gesättigten Kautschuk, z. B. EPM, basiert und Stapelfasern und ein Metallsalz einer ethylenisch ungesättigten Carbonsäure umfasst. In dieser Schrift wird auch beschrieben, dass neben dem direkten Einsatz der Metallsalze der ethylenisch ungesättigten Carbonsäure diese Salze auch erst in der Mischung erzeugt werden können, indem geeignete Metallsalze, wie Carbonate, Oxide oder Hydroxide, und die ethylenisch ungesättigte Carbonsäure der Mischung zugegeben werden und dort zu dem entsprechenden Metallsalz einer ethylenisch ungesättigten Carbonsäure reagieren.

Der Erfindung liegt daher die Aufgabe zu Grunde, Elastomerprodukte, insbesondere Antriebsriemen, die eine radikalisch vernetzte Kautschukmischung enthalten, bereitzustellen, die sich durch eine hohe Lebensdauer und umweltfreundliche Herstellung auszeichnen.

Gelöst wird diese Aufgabe erfindungsgemäß dadurch, dass die Kautschukmischung
- 0,1 bis 50 phr (Gewichtsteile, bezogen auf 100 Gewichtsteile der gesamten Kautschuke in der Mischung) zumindest einer Carbonsäure, die zumindest α,β- und γ,δ-ungesättigt ist und zumindest ein allylisches Wasserstoffatom am Ende der konjugierten Doppelbindungen aufweist, und
- 0,1 bis 50 phr zumindest eines Metallsalzes als Coaktivator enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es wurde festgestellt, dass durch die Zudosierung von zumindest einer Carbonsäure, die zumindest α,β- und γ,δ-ungesättigt ist und zumindest ein allylisches Wasserstoffatom am Ende der konjugierten Doppelbindungen aufweist, und zumindest einem Metallsalz zu einer unvernetzten Kautschukmischung, die nach der radikalischen Vernetzung im Elastomerprodukt enthalten ist, eine besonders hohe Vernetzungsausbeute und damit ein Elastomerprodukt mit guter Verstärkung erhalten werden kann. Diese gute Verstärkung führt zu einer besonders hohen Abriebbeständigkeit.

Für die Verbesserung der Vernetzungsausbeute scheint es wesentlich, dass die Carbonsäure ein System aus zumindest zwei konjugierten Doppelbindungen aufweist, das mit einer elektronenziehenden Carboxylgruppe versehen ist. Dadurch entsteht in Allylposition zur letzten konjugierten Doppelbindung ein besonders aktives Wasserstoffatom. Bei der radikalischen Vernetzung scheint die Carbonsäure auf diese Weise bevorzugt direkt an die Polymerkette gebunden zu werden und dann erst mit dem Metallsalz unter Vernetzungsbildung mit Hilfe von Peroxid auszureagieren.

Wichtig ist, dass die spezielle Carbonsäure und das Metallsalz in noch nicht reagierter Form der Kautschukmischung zudosiert werden. Bei Verwendung von Metallsalzen der speziellen Carbonsäuren konnte der verstärkende Effekt nicht beobachtet werden, da bei Vorliegen des Salzes vermutlich keine Vorabreaktion der Carbonsäure mit dem Polymer mehr stattfinden kann. Die Verwendung von Metallsalzen von nur ethylenisch ungesättigten Carbonsäuren (keine konjugierten Doppelbindungen vorhanden) führt nicht in allen Fällen zu der besonders guten Verstärkung, da die einfach ungesättigten Carbonsäuren vermutlich nicht aktiv genug sind, und ist mit umwelttechnischen Nachteilen verbunden.

Außerdem zeichnen sich die radikalisch vernetzten Kautschukmischungen mit der speziellen Carbonsäure und dem Metallsalz in den angegeben Mengen durch einen verringerten Druckverformungsrest, d. h. ein verringertes Kriechverhalten, aus. Dies bewirkt bei den Elastomerprodukten aus diesen Mischungen eine Verbesserung des Lebensdauerverhaltens, da die Produkte über die Lebensdauer eine geringe Änderung der Oberflächengeometrie zeigen.

Die radikalisch vernetzten Kautschukmischungen mit der speziellen Carbonsäure und dem Metallsalz in den angegeben Mengen weisen zusätzlich den Vorteil auf, dass sie eine hohe dynamische Haltbarkeit zeigen, so dass die Elastomerprodukte mit diesen Kautschukmischungen einem dynamischen Dauereinsatz, wie er beispielsweise bei Antriebsriemen vorliegt, gut standhalten. Ferner weisen die Kautschukmischungen gute Festigkeiten und Spannungswerte auf.

Die Kautschukmischungen für die erfindungsgemäßen Elastomerprodukte lassen sich ohne Probleme mischen, da die spezielle Carbonsäure und das Metallsalz gut in der Kautschukmatrix dispergierbar sind.

Eine besonders gute Verbesserung der Vernetzungsausbeute lässt sich erzielen, wenn die Kautschukmischung 10 bis 40 phr zumindest einer Carbonsäure, die zumindest α,β- und γ,δ-ungesättigt ist und zumindest ein allylisches Wasserstoffatom am Ende der konjugierten Doppelbindungen aufweist. Es kann eine Carbonsäure allein eingesetzt werden. Es ist aber auch möglich, dass mehrere Carbonsäuren dieses Typs im Gemisch eingesetzt werden.

Als Carbonsäure können alle eingesetzt werden, die sich durch die Anwesenheit von zumindest zwei konjugierten Doppelbindungen in α,β- und γ,δ-Stellung zur Carboxylgruppe auszeichnen und am Ende der konjugierten Doppelbindungen ein allylisches Wasserstoffatom aufweisen. Es können demnach auch Carbonsäuren verwendet werden, die drei oder mehr konjugierte Doppelbindungen aufweisen.

Gemäß einer bevorzugten Weiterbildung der Erfindung handelt es sich bei der Carbonsäure jedoch um eine 2,4-Hexandiensäure. Besonders bevorzugt wird trans,trans-2,4-Hexandiensäure (Sorbinsäure) eingesetzt, die in großen Mengen und kostengünstig am Markt verfügbar und ökologisch unbedenklich ist. Sie ist bekannt für den Einsatz als Konservierungsmittel. Sie lässt sich besonders gut in die Kautschukmischung einmischen und in dieser verteilen und führt zu Elastomerprodukten mit besonders guten dynamischen Eigenschaften. Bei der Einmischung entstehen keine reizenden oder giftigen flüchtigen Gase, so dass keine besonderen Abzugsanlagen für die Herstellung der Mischung vorgesehen werden müssen.

Die Kautschukmischung für das Elastomerprodukt enthält 0,1 bis 50 phr, vorzugsweise 5 bis 40 phr, zumindest eines Metallsalzes. Es können auch mehrere Metallsalze im Gemisch verwendet werden.

Als Metallsalze können z. B. Metallhydroxide, -oxide oder -carbonate eingesetzt werden, wobei sich die Metalloxide und -carbonate als besonders wirksam im Hinblick auf die Vernetzungsausbeute erwiesen haben und daher bevorzugt eingesetzt werden.

Bei den Metallsalzen kann es sich z. B. um Salze des Magnesiums, Bariums, Calciums, Lithiums, Natriums, Kaliums, Bleis, Zinns oder Ähnliche handeln. Vorzugsweise werden allerdings die besonders vernetzungsaktiven Salze des Zinks, insbesondere Zinkoxid, eingesetzt.

Um die Vernetzungsausbeute weiter zu verbessern und besonders abriebbeständige und dynamisch taugliche Elastomerprodukte zu erhalten, hat es sich als vorteilhaft erweisen, wenn man aktives Zinkoxid einsetzt. Aktives Zinkoxid zeichnet sich durch eine große spezifische Oberfläche aus. Während Standard-Zinkoxide oder Zinkweiße BET-Oberflächen bis zu 10 m²/g aufweisen (z. B. Zinkweiß Harzsiegel mit einer BET-Oberfläche von ca. 4,7 m²/g oder Zinkweiß Rotsiegel mit einer BET-Oberfläche von ca. 4,5 m²/g von der Firma Grillo), liegt die BET-Oberfläche bei aktiven Zinkoxide bei über 20 m²/g. Aktive Zinkoxide sind beispielsweise unter dem Namen "Zinkoxid aktiv" von der Firma LANXESS (BET-Oberfläche ca. 45 m²/g) oder Zinkoxid RAC von der Firma Brüggemann (BET-Oberfläche ca. 69 m²/g) erhältlich und werden in der Regel durch Fällungsreaktion aus Lösungen hergestellt, während Standard-Zinkoxide durch Verbrennen von Zinkdämpfen gewonnen werden.

Die Kautschukmischung für die Elastomerprodukte kann auf unterschiedlichen, radikalisch vernetzbaren Kautschuken und Verschnitten aus solchen Kautschuken basieren.

So kann die Kautschukmischung beispielsweise auf zumindest einem Ethylen-alpha-Olefin-Kautschuk, wie Ethylen-Propylen-Dien-Kautschuk (EPDM) oder Ethylen-Propylen-Kautschuk (EPM), basieren. Diese Kautschuktypen haben einen großen Einsatztemperaturbereich und zeichnen sich durch eine gute Chemikalien- und Ölbeständigkeit aus. EPDM und EPM können auch im Verschnitt eingesetzt werden. Kautschukmischungen, die auf zumindest einem Ethylen-alpha-Olefin-Kautschuk basieren, werden vorzugsweise für reibschlüssige Antriebsriemen wie Keilriemen oder Keilrippenriemen eingesetzt.

Alternativ dazu kann die Kautschukmischung auch auf zumindest einem hydrierten Nitrilkautschuk (HNBR) basieren, der sich durch gute Abriebbeständigkeit, gute Ölbeständigkeit und gute Tieftemperaturtauglichkeit auszeichnet. Kautschukmischungen, die auf zumindest einem hydrierten Nitrilkautschuk basieren, werden vorzugsweise für formschlüssige Antriebsriemen wie Zahnriemen eingesetzt.

Des Weiteren kann die Kautschukmischung auch andere Kautschuktypen, wie beispielsweise Silikonkautschuk, Polychloropren, Epichlorhydrinkautschuk, Naturkautschuk, Ethylen-Vinylacetat-Kautschuk, chlorsulfoniertes Polyethylen usw. enthalten.

Die radikalische Vernetzung der Kautschukmischung kann mit üblichen Peroxiden erfolgen. Es können z. B. 2,5-Dimethyl-2,5-di-tert.-butyl-peroxi-hexan, Di-tert.-butylperoxid, Tert.-butyl-perbenzoat, Dicumyl-peroxid, α,α'-Di-tert.-butyl-peroxi-di-isopropylbenzol eingesetzt werden.

Die Kautschukmischung kann ferner übliche Zuschlagstoffe in üblichen Mengen enthalten. Zu diesen Zuschlagstoffen zählen Füllstoffe (z. B. Ruß, Kieselsäure und Kurzfasern), Weichmacher und Wachse, Alterungsschutzmittel, Stearinsäure und Haftsysteme u. a.

Bei den erfindungsgemäßen Elastomerprodukten kann es sich um unterschiedlichste Produkte handeln, die dynamischen Belastungen standhalten müssen und für die eine gute Abriebbeständigkeit gewünscht wird. Diese Eigenschaften sind z. B. bei Transportbändern, technischen Schläuchen und elastomerbeschichteten Geweben erforderlich.

Gemäß einer bevorzugten Ausgestaltung der Erfindung handelt es sich bei dem Elastomerprodukt jedoch um einen Antriebsriemen, der die radikalisch vernetzte Kautschukmischung enthält. Die Antriebsriemen lassen sich kostengünstig und umweltfreundlich herstellen und zeichnen sich durch eine hohe dynamische Belastbarkeit und eine erhöhte Lebensdauer durch verminderten Abrieb aus.

Bei den Antriebsriemen kann es sich um reibschlüssige Antriebsriemen, wie Flachriemen, Keilriemen oder Keilrippenriemen, handeln. Vorzugsweise handelt es sich um einen Keilrippenriemen, bei dem ein besonders gutes Abriebverhalten erzielt werden kann.

Handelt es sich bei dem Antriebsriemen um einen Keilrippenriemen, so kann die radikalisch vernetzte Kautschukmischung die Rippen und/oder den Rücken und/oder die Cordeinbett- und/oder die Gummierungsmischung des Keilrippenriemens bilden.

Möglich ist auch, dass es sich bei dem Antriebsriemen um einen formschlüssigen Antriebsriemen, vorzugsweise einen Zahnriemen, handelt. Bei dem Zahnriemen wird bevorzugt dessen Decklage und dessen die Zähne umfassender Grundkörper durch die radikalisch vernetzte Kautschukmischung gebildet. Der Zahnriemen zeichnet sich dann durch die verbesserte Festigkeit und die höheren Spannungswerte der vernetzten Mischung durch eine verbesserte Lebensdauer aus, da die Gefahr von Zahnabscherungen durch festere Zähne vermindert wird. Die vorteilhafte Erhöhung der Festigkeit und der Spannungswerte ist auch bei hohen Temperaturen zu beobachten.

Die erfindungsgemäßen Elastomerprodukte können nach dem Fachmann bekannten Verfahren hergestellt werden. So können beispielsweise Keilrippenriemen nach Schleif-oder Formverfahren und Zahnriemen nach Durchdrückverfahren hergestellt werden. Die Kautschukmischung wird dabei nach üblichen Verfahren gemischt und im Anschluss wie eine herkömmlich Kautschukmischung bei der Produktrohlings-Herstellung eingesetzt. Der Rohling wird dann mit herkömmlichen Vulkanisationsverfahren vernetzt und abschließend in die gewünschte Form gebracht.

Im Folgenden wird die Erfindung anhand von Ausführungsbeispielen näher erläutert, ohne jedoch auf diese Beispiele beschränkt zu sein.

In den folgenden Tabellen 1 bis 3 sind Vergleichs- und erfindungsgemäße Kautschukmischungen dargestellt, die für die Elastomerprodukte eingesetzt werden können. Die Tabelle 1 zeigt Kautschukmischungen auf der Basis von EPDM und die Tabelle 2 zeigt Kautschukmischungen auf der Basis von EPM. Diese Mischungen können z. B. für die Rippen von Keilrippenriemen eingesetzt werden. Tabelle 3 zeigt fasergefüllte Mischungen auf der Basis von HNBR, die z. B. für Zahnriemen verwendet werden können. Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die Mischungen der Tabellen wurden hinsichtlich der Sorbinsäure und der Zinksalze variiert.

Das in der Tabelle 1 verwendete Zinksorbat wurde nach folgenden Verfahren hergestellt:
In 1000 ml Ethanol wurden 224 g Sorbinsäure gegeben. Unter Rühren wurden bei Raumtemperatur nach und nach 117 g basisches Zinkcarbonat zugesetzt. Das Gemisch bildete eine gut rührbare Suspension. Bei Raumtemperatur wurde weitergerührt und es setzte nach kurzer Verzögerung die Bildung von CO₂ ein, wodurch man den Fortgang der Reaktion erkennen kann.
Nach 24 Stunden war so viel Zinkdisorbat entstanden, dass sich eine feste Masse gebildet hatte. Im Rotationsverdampfer wurde bei 60°C und im Vakuum das Ethanol abgezogen. Es verblieb eine weiße Masse an Zinkdisorbat, die in einer Mühle zerkleinert wurde.

Die Mischungsherstellung erfolgte unter üblichen Bedingungen. Die Umsatzzeiten bis zum Erreichen der relativen Vernetzungsgrade von 10 % (t₁₀) und 90 % (t₉₀) sowie die Differenz zwischen Endschubkraft Fₑ und Anfangsschubkraft Fₐ als Maß für die Vernetzungsausbeute wurden über ein rotorloses Vulkameter (MDR = Moving Disc Rheometer) gemäß DIN 53 529 bei 180 °C ermittelt. Aus sämtlichen Mischungen wurden Prüfkörper durch Vulkanisation unter Druck bei 180 °C (Heizzeiten: 10 min bei Tabellen 1 und 2, 20 min bei Tabelle 3), hergestellt und mit diesen Prüfkörpern für die Kautschukindustrie typische Materialeigenschaften bestimmt, die in den Tabellen aufgelistet sind. Für die Tests an Prüfkörpern wurden folgende Testverfahren angewandt:
- Shore-A-Härte bei Raumtemperatur und ggf. 150 °C gemäß DIN 53 505
- Zugfestigkeit bei Raumtemperatur und ggf. 150 °C gemäß DIN 53 504
- Reißdehnung bei Raumtemperatur und ggf. 150 °C gemäß DIN 53 504
- Spannungswert bei Raumtemperatur und ggf. 150 °C und 100 % Dehnung gemäß DIN 53 504
- Druckverformungsrest gemäß DIN 53 517 über 22 h bei 100 °C und mit einer Verformung von 25 %
   Zugfestigkeit, Reißdehnung und Spannungswerte wurden bei den kalandrierten fasergefüllten Mischungen sowohl in Längs- als auch in Querrichtung zu den durch die Kalandrierung ausgerichteten Fasern ermittelt.
- Weiterreißwiderstand bei Raumtemperatur gemäß DIN 53 507 WRY an 2 mm dicken Probekörpern
- Abrieb gemäß DIN 53 516

**Tabelle 1**

| Bestandteile | Einheit | 1(V) | 2(V) | 3(E) | 4(V) |
|---|---|---|---|---|---|
| EPM | phr | 100 | 100 | 100 | 100 |
| Ruß | phr | 55 | 55 | 55 | 55 |
| Stearinsäure | phr | 1 | 1 | 1 | 1 |
| Weichmacher | phr | 10 | 10 | 10 | 10 |
| Alterungsschutzmittel | phr | 2 | 2 | 2 | 2 |
| Peroxid auf Träger^{a} | phr | 7 | 7 | 7 | 7 |
| aktives Zinkoxid^{b} | phr | 5 | 5 | 10 | 5 |
| Sorbinsäure | phr | - | - | 10 | - |
| Zinkdisorbat | phr | - | - | - | 15 |
| Zinkdimethacrylat | phr | - | 15 | - | - |

| Eigenschaften | | | | | |
|---|---|---|---|---|---|
| Fₑ-Fₐ | dNm | 34,00 | 54,00 | 47,33 | 36,28 |
| t₁₀ | min | 0,52 | 0,40 | 0,43 | 0,38 |
| t90 | min | 6,67 | 4,50 | 5,43 | 4,85 |
| Härte | Shore A | 72 | 82 | 80 | 76 |
| Zugfestigkeit bei RT | MPa | 18 | 23 | 22 | 20 |
| Reißdehnung bei RT | % | 255 | 250 | 221 | 240 |
| Spannungswert 100 % | MPa | 4 | 9 | 8 | 6 |
| Druckverformungsrest | % | 30 | 35 | 20 | 29 |

| | | | | | |
|---|---|---|---|---|---|
| ^{a} α,α'-Di-tert.-butyl-peroxi-di-isopropyl-benzol, 40 Gew.-% auf anorganischem Träger ^{b} aktives Zinkoxid, "Zinkoxid aktiv" der Firma LANXESS, Deutschland | | | | | |

Mit den Mischungen, die in der Tabelle 1 aufgelistet sind, wurde der Zusatz unterschiedlicher vernetzungsaktiver Substanzen untersucht. Mischungsreihe 1 zeigt ein System, welches auf den Zusatz von Sorbinsäure und Zinksalzen von Carbonsäuren verzichtet. Die Vernetzung wird ausschließlich über das Peroxid erreicht. Die Vernetzungsausbeuten von 34 dNm reichen im Falle von Mischungen auf der Basis von EPDM nicht für brauchbare Produkte, wie Keilrippenriemen, aus.

Mischungsreihe 2 zeigt die gleiche Mischung mit 15 phr Zinkdimethacrylat, wie sie aus dem Stand der Technik, z. B. der EP 1 205 515 A1, bekannt ist. Der Druckverformungsrest wird vergrößert, d. h. die Mischung neigt zum Kriechen. Dies führt z. B. bei Keilrippenriemen oder Zahnriemen dazu, dass sich die Oberflächengeometrie der Riemen ändert und damit zu einem schlechteren Verschleißverhalten führt.
Mischungsreihe 4 zeigt, dass der Einsatz einer ähnlichen Substanz wie Zinkdimethacrylat, nämlich Zinkdisorbat, in äquimolarer Menge fast keine Wirkung im Hinblick auf die Vernetzungsausbaute und den Druckverformungsrest zeigt. Es wird eine Vernetzungsausbeute von 36,28 dNm erreicht die sich nicht signifikant von der Mischung 1 ohne Metallsalz von Carbonsäuren unterscheidet. Gegenüber dieser ist lediglich eine geringfügige Härteerhöhung festzustellen, was auf die Funktion eines inaktiven Füllstoffs hindeutet.

Setzt man nun in der gleichen Mischung (Mischungsreihe 3) die freie Sorbinsäure in Kombination mit Zinkoxid ein, so stellt man überraschenderweise fest, dass eine sehr hohe Vernetzungsausbeute erreicht wird und die Mischung sehr gut zur Produktion abriebbeständiger Elastomerprodukte, wie Antriebsriemen, verwendet werden kann. Dies ist umso überraschender als der Reaktionsmechanismus nicht über die intermediäre Bildung von Zinkdisorbat gegangen sein kann, denn damit wären keine besseren Ergebnisse erzielbar gewesen als mit Mischungsreihe 4. Der Vernetzungsmechanismus wird vermutlich zuerst durch die Anbindung von Sorbinsäure an das EPM-Molekül vonstatten gegangen sein. Dafür stehen diverse Möglichkeiten offen. Über das am C₆ befindliche Wasserstoffatom ist mit den Ketten des EPM eine EN-Typ-Reaktion möglich, im Falle einer Wasserstoffabstraktion von EPM-Molekül ist die Sorbinsäure auch zu sehr schnellen Diels-Alder-Reaktionen fähig.
Auch der Druckverformungsrest wird deutlich reduziert, dadurch wird das Lebensdauerverhalten von beispielsweise Riemen stark verbessert, da es vermindert zum Kriechen und Setzen der Mischungen kommt.

Auf einen Vergleichsversuch mit freier Methacrylsäure und Zinkoxid musste verzichtet werden, da die Mischung durch nicht umgesetzte Methacrylsäurereste extrem tränenreizend war und sofort aus arbeitsplatzhygienischer Sicht entsorgt werden musste. Eine wirtschaftliche Fertigung von verkaufbaren Riemen ist mit einer solchen Mischung aus Umweltgesichtspunkten nicht möglich.

**Tabelle 2**

| Bestandteile | Einheit | 5(E) | 6(E) | 7(E) | 8(E) | 9(E) | 10(E) |
|---|---|---|---|---|---|---|---|
| EPDM | phr | 100 | 100 | 100 | 100 | 100 | 100 |
| Ruß | phr | 55 | 55 | 55 | 55 | 55 | 55 |
| Stearinsäure | phr | 1 | 1 | 1 | 1 | 1 | 1 |
| Weichmacher | phr | 10 | 10 | 10 | 10 | 10 | 10 |
| Alterungsschutzmittel | phr | 5 | 5 | 5 | 5 | 5 | 5 |
| Peroxid auf Träger^{a} | phr | 7 | 7 | 7 | 7 | 7 | 7 |
| Sorbinsäure | phr | 10 | 15 | 5 | 10 | 15 | 15 |
| aktives Zinkoxid^{b} | phr | 10 | 10 | - | - | - | - |
| Zinkoxid indirekt^{c} | phr | - | - | 10 | 10 | 10 | - |
| basisches. | phr | - | - | - | - | - | 10 |
| Zinkcarbonat | | | | | | | |

| Eigenschaften | | | | | | | |
|---|---|---|---|---|---|---|---|
| Fₑ-Fₐ | dNm | 47,33 | 54,45 | 30,67 | 32,11 | 33,3 | 36,5 |
| t₁₀ | min | 0,43 | 0,42 | 0,51 | 0,48 | 0,46 | 0,41 |
| t90 | min | 5,43 | 5,18 | 5,68 | 5,83 | 5,08 | 4,7 |
| Härte | Shore A | 80 | 82 | 73 | 74 | 76 | 79 |
| Zugfestigkeit bei RT | MPa | 22 | 21 | 22 | 22 | 20 | 18,1 |
| Reißdehnung bei RT | %. | 221 | 175 | 305 | 298 | 283 | 229 |
| Spannungsw. 100 % | MPa | 8 | 11 | 5 | 5 | 6 | 7,9 |
| Weiterreißwiderstand | N/mm | 3,7 | 4,6 | 4,1 | 3,8 | 3,8 | 3,9 |
| Abrieb | mm³ | 44 | 51 | 70 | 72 | 78 | 89 |

| | | | | | | | |
|---|---|---|---|---|---|---|---|
| ^{a} α,α'-Di-tert.-butyl-peroxi-di-isopropyl-benzol, 40 Gew.-% auf anorganischem Träger ^{b} aktives Zinkoxid, "Zinkoxid aktiv" der Firma LANXESS, Deutschland ^{c} Zinkweiss Harzsiegel, Norzinco GmbH Harzer Zinkoxide | | | | | | | |

Die Mischungen der Tabelle 2 zeigen die Untersuchung zum Einsatz verschiedener Zinksalze im Zusammenspiel mit Sorbinsäure in EPDM-Mischungen.
Man erkennt die Erhöhung der Vernetzungsausbeute mit zunehmender Menge an Sorbinsäure. Bei Verwendung von aktivem Zinkoxid (Mischungen 5 und 6) können die besten Vernetzungsausbeuten erzielt werden, was in einem besonders geringen Abrieb resultiert. Auch in Bezug auf Festigkeit und Spannungswert bei Dehnung zeigen diese beiden Mischungen die höchsten Werte.
Aus der Tabelle 2 wird außerdem noch mal deutlich, dass sich die Abriebbeständigkeit parallel zur Vernetzungsausbeute verhält.

**Tabelle 3**

| Bestandteile | Einheit | 11(V) | 12(E) |
|---|---|---|---|
| HNBR^{d} | phr | 100 | 100 |
| Ruß | phr | 15 | 15 |
| Kieselsäure | phr | 15 | 15 |
| Aramidfasern^{e} | phr | 3 | 3 |
| Stearinsäure | phr | 1 | 1 |
| Weichmacher | phr | 6 | 6 |
| Alterungsschutzmittel | phr | 2,5 | 2,5 |
| Peroxid auf Träger^{a} | phr | 7 | 7 |
| aktives Zinkoxid^{b} | phr | 6 | 11,6 |
| Sorbinsäure | phr | - | 15,6 |
| Zinkdimethacrylat | phr | 18 | - |

| Eigenschaften | | | |
|---|---|---|---|
| Fₑ-Fₐ | dNm | 28,83 | 32,19 |
| t₁₀ | min | 0,34 | 0,44 |
| t₉₀ | min | 7,96 | 7,54 |
| Härte | Shore A | 82 | 83 |
| Zugfestigkeit bei RT (längs) | MPa | 18,5 | 22,5 |
| Zugfestigkeit bei RT (quer) | MPa | 16,7 | 19,9 |
| Reißdehnung bei RT (längs) | % | 399 | 357 |
| Reißdehnung bei RT (quer) | % | 344 | 331 |
| Spannungswert 100 % bei RT (längs) | MPa | 8,6 | 9,0 |
| Spannungswert 100 % bei RT (quer) | MPa | 4,8 | 5,6 |
| Zugfestigkeit bei 150 °C (längs) | MPa | 6,0 | 6,5 |
| Zugfestigkeit bei 150 °C (quer) | MPa | 5,2 | 6,4 |
| Reißdehnung bei 150 °C (längs) | % | 194 | 146 |
| Reißdehnung bei 150 °C (quer) | % | 186 | 165 |
| Spannungswert 100 % bei 150 °C (längs) | MPa | 4,4 | 5,2 |
| Spannungswert 100 % bei 150 °C (quer) | MPa | 3,4 | 4,3 |

| | | | |
|---|---|---|---|
| ^{a} α,α'-Di-tert.-butyl-peroxi-di-isopropyl-benzol, 40 Gew.-% auf anorganischem Träger ^{b} aktives Zinkoxid, "Zinkoxid aktiv" der Firma LANXESS, Deutschland ^{d} 34 % Acrylnitrilgehalt, 4 % Restdoppelbindungsanteil ^{e} p-Aramidfasern mit einer Länge von durchschnittlich 3 mm, Twaron^{®}-Fasern | | | |

Bei den Mischungen der Tabelle 3 handelt es sich um faserverstärkte Mischungen auf der Basis von HNBR wie sie üblicherweise für Zahnriemen eingesetzt werden.
Durch die Anwesenheit der durch den Kalandriervorgang ausgerichteten Fasern, unterscheiden sich die aus dem Zugversuch erhaltenen Daten für die Quer- und Längsrichtung.
Beim Übergang von Mischung 11 zu Mischung 12 wurde das Zinkdimethacrylat äquimolar durch Sorbinsäure und Zinkoxid ausgetauscht. Die Mischung 2 zeichnet sich durch eine erhöhte Vernetzungsausbeute aus.
Für den Herstellprozess vorteilhaft ist außerdem, dass die Zeit zu 10 % Vernetzung (t₁₀) verlängert und die Zeit bis zu 90 % Vernetzung (t₉₀) verkürzt ist. D. h., die Mischung weist eine verbesserte Scorchsicherheit bei gleichzeitig verkürzter Gesamtvulkanisationszeit auf. Im Hinblick auf die Produkteigenschaften zeigt die Mischung 12 ferner eine deutliche Verbesserung der Festigkeit und deutlich erhöhte Spannungswerte, beides auch bei erhöhten Temperaturen. Diese Eigenschaften sind bei einem Zahnriemen besonders wichtig, da dadurch eine Zahnabscherung und damit einer verkürzten Lebensdauer entgegengewirkt wird.

## Patentansprüche

1. Elastomerprodukt, das eine radikalisch vernetzte Kautschukmischung enthält, **dadurch gekennzeichnet, dass**
die Kautschukmischung
- 0,1 bis 50 phr (Gewichtsteile, bezogen auf 100 Gewichtsteile der gesamten Kautschuke in der Mischung) zumindest einer Carbonsäure, die zumindest α,β- und γ,δ-ungesättigt ist und zumindest ein allylisches Wasserstoffatom am Ende der konjugierten Doppelbindungen aufweist, und
- 0,1 bis 50 phr zumindest eines Metallsalzes als Coaktivator enthält.

2. Elastomerprodukt nach Anspruch 1, **dadurch gekennzeichnet, dass** die Kautschukmischung 10 bis 40 phr zumindest einer Carbonsäure, die zumindest α,β-und γ,δ-ungesättigt ist und zumindest ein allylisches Wasserstoffatom am Ende der konjugierten Doppelbindungen aufweist, enthält.

3. Elastomerprodukt nach Anspruch 1 oder 2, **dadurch gekennzeichnet, dass** zumindest eine der Carbonsäuren eine 2,4-Hexandiensäure ist.

4. Elastomerprodukt nach Anspruch 3, **dadurch gekennzeichnet, dass** zumindest eine der Carbonsäuren eine trans,trans-2,4-Hexandiensäure (Sorbinsäure) ist.

5. Elastomerprodukt nach zumindest einem der vorhergehenden Ansprüche, **dadurch gekennzeichnet, dass** die Kautschukmischung 5 bis 40 phr zumindest eines Metallsalzes enthält.

6. Elastomerprodukt nach zumindest einem der vorhergehenden Ansprüche, **dadurch gekennzeichnet, dass** zumindest eines der Metallsalze ein Metalloxid oder ein Metallcarbonat ist.

7. Elastomerprodukt nach zumindest einem der vorhergehenden Ansprüche, **dadurch gekennzeichnet, dass** zumindest eines der Metallsalze ein Salz des Zinks ist.

8. Elastomerprodukt nach Anspruch 7, **dadurch gekennzeichnet, dass** zumindest eines der Metallsalze Zinkoxid ist.

9. Elastomerprodukt nach Anspruch 7, **dadurch gekennzeichnet, dass** das Zinkoxid aktives Zinkoxid mit einer BET-Oberfläche von mehr als 20 m²/g ist.

10. Elastomerprodukt nach zumindest einem der vorhergehenden Ansprüche, **dadurch gekennzeichnet, dass** die Kautschukmischung zumindest einen Ethylen-alpha-Olefin-Kautschuk enthält.

11. Elastomerprodukt nach Anspruch 10, **dadurch gekennzeichnet, dass** die Kautschukmischung zumindest einen Ethylen-Propylen-Dien-Kautschuk (EPDM) enthält.

12. Elastomerprodukt nach Anspruch 10, **dadurch gekennzeichnet, dass** die Kautschukmischung zumindest einen Ethylen-Propylen-Kautschuk (EPM) enthält.

13. Elastomerprodukt nach zumindest einem der Ansprüche 1 bis 9, **dadurch gekennzeichnet, dass** Kautschukmischung zumindest einen hydrierten Nitrilkautschuk enthält.

14. Elastomerprodukt nach zumindest einem der vorhergehenden Ansprüche, **dadurch gekennzeichnet, dass** es ein Antriebsriemen ist.

15. Elastomerprodukt nach Anspruch 14, **dadurch gekennzeichnet, dass** es ein reibschlüssiger Antriebsriemen ist.

16. Elastomerprodukt nach Anspruch 15, **dadurch gekennzeichnet, dass** es ein Keilrippenriemen ist.

17. Elastomerprodukt nach Anspruch 16, **dadurch gekennzeichnet, dass** die radikalisch vernetzte Kautschukmischung die Rippen des Keilrippenriemens bildet.

18. Elastomerprodukt nach Anspruch 16 oder 17, **dadurch gekennzeichnet, dass** die radikalisch vernetzte Kautschukmischung den Rücken des Keilrippenriemens bildet.

19. Elastomerprodukt nach zumindest einem der Ansprüche 16 bis 18, **dadurch gekennzeichnet, dass** die radikalisch vernetzte Kautschukmischung die Cordeinbett-und/oder eine Gummierungsmischung des Keilrippenriemens bildet.

20. Elastomerprodukt nach Anspruch 14, **dadurch gekennzeichnet, dass** es ein formschlüssiger Antriebsriemen ist.

21. Elastomerprodukt nach Anspruch 20, **dadurch gekennzeichnet, dass** es ein Zahnriemen ist.

22. Elastomerprodukt nach Anspruch 21, **dadurch gekennzeichnet, dass** die radikalisch vernetzte Kautschukmischung die Decklage und den die Zähne umfassenden Grundkörper bildet.

## Claims

1. Elastomeric product which contains a radical cross-linked rubber mixture, **characterized in that** the rubber mixture contains:
- 0.1 to 50 phr (parts by weight, based on 100 parts by weight of all rubbers in the mixture) of at least one carboxylic acid, which is at least α,β-unsaturated and γ,δ-unsaturated and has at least one allylic hydrogen atom at the end of the conjugated double bonds, and,
- as co-activator, 0.1 to 50 phr of at least one metal salt.

2. Elastomeric product according to Claim 1, **characterized in that** the rubber mixture contains 10 to 40 phr of at least one carboxylic acid, which is at least α,β-unsaturated and γ,δ-unsaturated and and has at least one allylic hydrogen atom at the end of the conjugated double bonds.

3. Elastomeric product according to Claim 1 or 2, **characterized in that** at least one of the carboxylic acids is a 2,4-hexanedienoic acid.

4. Elastomeric product according to Claim 3, **characterized in that** at least one of the carboxylic acids is a trans,trans-2,4-hexanedienoic acid (sorbic acid).

5. Elastomeric product according to at least one of the preceding claims, **characterized in that** the rubber mixture contains 5 to 40 phr of at least one metal salt.

6. Elastomeric product according to at least one of the preceding claims, **characterized in that** at least one of the metal salts is a metal oxide or a metal carbonate.

7. Elastomeric product according to at least one of the preceding claims, **characterized in that** at least one of the metal salts is a zinc salt.

8. Elastomeric product according to Claim 7, **characterized in that** at least one of the metal salts is zinc oxide.

9. Elastomeric product according to Claim 7, **characterized in that** the zinc oxide is an active zinc oxide having a BET surface area of more than 20 m²/g.

10. Elastomeric product according to at least one of the preceding claims, **characterized in that** the rubber mixture contains at least one ethylene-alpha-olefin rubber.

11. Elastomeric product according to Claim 10, **characterized in that** the rubber mixture contains at least one ethylene-propylene-diene rubber (EPDM).

12. Elastomeric product according to Claim 10, **characterized in that** the rubber mixture contains at least one ethylene-propylene rubber (EPM).

13. Elastomeric product according to at least one of Claims 1 to 9, **characterized in that** the rubber mixture contains at least one hydrogenated nitrile rubber.

14. Elastomeric product according to at least one of the preceding claims, **characterized in that** it is a drive belt.

15. Elastomeric product according to Claim 14, **characterized in that** it is a friction-tight drive belt.

16. Elastomeric product according to Claim 15, **characterized in that** is a V-ribbed belt.

17. Elastomeric product according to Claim 16, **characterized in that** the radical cross-linked rubber mixture forms the ribs of the V-ribbed belt.

18. Elastomeric product according to Claim 16 or 17, **characterized in that** the radical cross-linked rubber mixture forms the back of the V-ribbed belt.

19. Elastomeric product according to at least one of Claims 16 to 18, **characterized in that** the radical cross-linked rubber mixture forms the cord embedding mixture and or a rubberizing mixture of the V-ribbed belt.

20. Elastomeric product according to Claim 14, **characterized in that** it is a form-tight drive belt.

21. Elastomeric product according to Claim 20, **characterized in that** is a toothed belt.

22. Elastomeric product according to Claim 21, **characterized in that** the radical cross-linked rubber mixture forms the cover layer and the base body comprising the teeth.

## Revendications

1. Produit élastomère, qui contient un mélange de caoutchoucs réticulé par voie radicalaire, **caractérisé en ce que**
le mélange de caoutchouc contient
- 0,1 à 50 phr (parties en poids, par rapport à 100 parties en poids de la totalité des caoutchoucs dans le mélange) d'au moins un acide carboxylique, qui est au moins α,β- et γ,δ-insaturé et comporte au moins un atome d'hydrogène allylique à la fin des doubles liaisons conjuguées, et
- 0,1 à 50 phr d'au moins un sel métallique en tant que coactivateur.

2. Produit élastomère selon la revendication 1, **caractérisé en ce que** le mélange de caoutchoucs contient 10 à 40 phr d'au moins un acide carboxylique, qui est au moins α,β- et γ,δ-insaturé et comporte au moins un atome d'hydrogène allylique à la fin des doubles liaisons conjuguées.

3. Produit élastomère selon la revendication 1 ou 2, **caractérisé en ce qu'**au moins un des acides carboxyliques est un acide hexa-2,4-diénoïque.

4. Produit élastomère selon la revendication 3, **caractérisé en ce qu'**au moins un des acides carboxyliques est un acide trans,trans-hexa-2,4-diénoïque (acide sorbique).

5. Produit élastomère selon au moins l'une quelconque des revendications précédentes, **caractérisé en ce que** le mélange de caoutchoucs contient 5 à 40 phr d'au moins un sel métallique.

6. Produit élastomère selon au moins l'une quelconque des revendications précédentes, **caractérisé en ce qu'**au moins un des sels métalliques est un oxyde métallique ou un carbonate métallique.

7. Produit élastomère selon au moins l'une quelconque des revendications précédentes, **caractérisé en ce qu'**au moins un des sels métalliques est un sel de zinc.

8. Produit élastomère selon la revendication 7, **caractérisé en ce qu'**au moins un des sels métalliques est un oxyde de zinc.

9. Produit élastomère selon la revendication 7, **caractérisé en ce que** l'oxyde de zinc est un oxyde de zinc actif ayant une surface BET supérieure à 20 m²/g.

10. Produit élastomère selon au moins l'une quelconque des revendications précédentes, **caractérisé en ce que** le mélange de caoutchoucs contient au moins un caoutchouc éthylène-alpha-oléfine.

11. Produit élastomère selon la revendication 10, **caractérisé en ce que** le mélange de caoutchoucs contient au moins un caoutchouc éthylène-propylène-diène (EPDM).

12. Produit élastomère selon la revendication 10, **caractérisé en ce que** le mélange de caoutchoucs contient au moins un caoutchouc éthylène-propylène (EPM).

13. Produit élastomère selon au moins l'une quelconque des revendications 1 à 9, **caractérisé en ce que** le mélange de caoutchoucs contient au moins un caoutchouc de nitrile hydrogéné.

14. Produit élastomère selon au moins l'une quelconque des revendications précédentes, **caractérisé en ce qu'**il s'agit d'une courroie d'entraînement.

15. Produit élastomère selon la revendication 14, **caractérisé en ce qu'**il s'agit d'une courroie d'entraînement à friction.

16. Produit élastomère selon la revendication 15, **caractérisé en ce qu'**il s'agit d'une courroie striée.

17. Produit élastomère selon la revendication 16, **caractérisé en ce que** le mélange de caoutchoucs réticulé par voie radicalaire forme les côtes de la courroie striée.

18. Produit élastomère selon la revendication 16 ou 17, **caractérisé en ce que** le mélange de caoutchoucs réticulé par voie radicalaire forme le dos de la courroie striée.

19. Produit élastomère selon au moins l'une quelconque des revendications 16 à 18, **caractérisé en ce que** le mélange de caoutchoucs réticulé par voie radicalaire forme le mélange d'enrobage côtelé et/ou un mélange de revêtement de la courroie striée.

20. Produit élastomère selon la revendication 14, **caractérisé en ce qu'**il s'agit d'une courroie d'entraînement à engagement positif.

21. Produit élastomère selon la revendication 20, **caractérisé en ce qu'**il s'agit d'une courroie dentée.

22. Produit élastomère selon la revendication 21, **caractérisé en ce que** le mélange de caoutchoucs réticulé par voie radicalaire forme la couche supérieure et le corps de base qui comprend les dents.
